# EUROPÄISCHE PATENTSCHRIFT

(11) **EP 4 686 913 B1**
(45) Veröffentlichungstag und Bekanntmachung des Hinweises auf die Patenterteilung: **30.09.2026**
(21) Anmeldenummer: 25189010.9
(22) Anmeldetag: 11.07.2025
(51) Int. Cl.: G01C 19/58, G01P 15/00, G01P 15/08, G01P 15/093

(54) **VERFAHREN UND SENSOR ZUR BESTIMMUNG EINER WINKELBESCHLEUNIGUNG EINER EXTERNEN ROTATION**
METHOD AND SENSOR FOR DETERMINING AN ANGULAR ACCELERATION OF AN EXTERNAL ROTATION
MÉTHODE ET CAPTEUR POUR DÉTERMINER L'ACCÉLÉRATION ANGULAIRE D'UNE ROTATION EXTERNE

(30) Priorität: 02.08.2024 DE 102024122068
(43) Veröffentlichungstag der Anmeldung: 04.02.2026
(73) Patentinhaber: Deutsches Zentrum für Luft- und Raumfahrt e.V., 53227 Bonn (DE)
(72) Erfinder: Efremov, Prof. Dr., Maxim, 89081 Ulm (DE); Konrad, Bernd, 89081 Ulm (DE)
(74) Vertreter: RPK Patentanwälte Reinhardt und Kaufmann Partnerschaft mbB

(56) Entgegenhaltungen:
- EP-A1- 3 696 505
- BERND KONRAD ET AL: "Angular Bloch Oscillations and their applications", ARXIV.ORG, CORNELL UNIVERSITY LIBRARY, 201 OLIN LIBRARY CORNELL UNIVERSITY ITHACA, NY 14853, 20 February 2024 (2024-02-20), XP091687086

## Beschreibung

### Stand der Technik

Die Erfindung betrifft ein Verfahren zur Bestimmung einer Winkelbeschleunigung einer externen Rotation sowie einen Sensor zur Durchführung eines Verfahrens zur Bestimmung einer Winkelbeschleunigung einer externen Rotation.

Ein solches Verfahren und ein solcher Sensor sind im Stand der Technik bekannt, beispielsweise aus BERND KONRAD ET AL: "Angular Bloch Oscillations and their applications", ARXIV.ORG, CORNELL UNIVERSITY LIBRARY, 201 OLIN LIBRARY CORNELL UNIVERSITY ITHACA, NY 14853, 20. Februar 2024 (2024-02-20), XP091687086.

Eine externe Rotation führt im Allgemeinen zu drei nicht-inertialen Kräften, der Corioliskraft (*F*_{C}), der Zentrifugalkraft (*F*_{Z}) und der Eulerkraft (*F*_{E}). Die ersten beiden werden dabei durch die Winkelgeschwindigkeit Ω bestimmt, *F*_{C} ∝ Ω und *F*_{Z} ∝ Ω². Ändert diese sich allerdings in der Zeit, liegt auch eine Winkelbeschleunigung *Ω̇* vor und die Eulerkraft, *F*_{E} ∝ Ω̇, kommt zum Tragen.

Im Falle von externen Rotationen mit konstanter Winkelgeschwindigkeit Ω und geringer Amplitude, dominiert daher stets die Corioliskraft den Einfluss auf das untersuchte System. Eine solche externe Rotation kann präzise mit klassischen und quantenmechanischen Gyroskopen basierend auf sogenannten Sagnac-Interferometern mit elektromagnetischen Wellen oder Materiewellen gemessen werden. Wie beispielsweise in Ramanathan, A. K. (2011), "A ring with a spin: Superfluidity in a toroidal Bose-Einstein condensate", University of Maryland, College Park beschrieben, existieren für Materiewellen Torus-Geometrien, bei denen die Interferometerarme eine Kreisfläche (mehrmals) umschließen und dadurch die Sagnac-Phase messen.

Außerdem kann der Einfluss der Corioliskraft auf frei fallende Atome in ungeführten Atominterferometern gemessen und dadurch die Winkelgeschwindigkeit Ω ermittelt werden.

Im Fall von zeitlich veränderlichen Drehbewegungen mit nicht verschwindender Winkelgeschwindigkeit Ω kann sich das Vorgehen je nach Amplitude dieses Wertes unterscheiden.

Bei Veränderungen der Winkelgeschwindigkeit weit langsamer als die Repetitionsrate des Experiments, kann der direkte Einfluss der Eulerkraft vernachlässigt werden und die Winkelgeschwindigkeit Ω kann mit den oben genannten Techniken gemessen werden. Wie in Schreiber, K. U., Kodet, J., Hugentobler, U., Klügel, T., & Wells, J. P. R. (2023). Variations in the Earth's rotation rate measured with a ring laser interferometer. Nature Photonics, 17(12), 1054-1058 gezeigt, kann durch ausreichend viele Messungen dadurch Ω vollständig als Funktion der Zeit aufgetragen werden.

Für schnelle Veränderungen, wie im Bereich der Seismologie oder zur Verbesserung der Navigationstechnik, ist allerdings eine direkte Messung der Winkelbeschleunigung *Ω̇* von Interesse. Hierzu existieren klassische Apparate, wie beispielsweise in Nusbaum, U., Rusnak, I., & Klein, I. (2019). Angular accelerometer-based inertial navigation system. Navigation, 66(4), 681-693 beschrieben, basierend auf unterschiedlichen Techniken. Beispielsweise existieren Winkelbeschleunigungssensoren basierend auf Flüssigkeitsrotoren, Mikrofluidkanälen, amorphen Drähten, piezoelektrischen Elementen, oder mikro-elektromechanischen Systemen (MEMS).

### Offenbarung der Erfindung

Die Aufgabe der Erfindung ist es, ein verbessertes Verfahren zur Bestimmung einer Winkelbeschleunigung einer externen Rotation anzugeben.

Eine weitere Aufgabe ist es, einen Sensor zur Durchführung eines solchen Verfahrens zur Bestimmung einer Winkelbeschleunigung einer externen Rotation zu schaffen.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Nach einem Aspekt der Erfindung wird ein Verfahren zur Bestimmung einer Winkelbeschleunigung einer externen Rotation vorgeschlagen, umfassend Präparieren einer Mehrzahl von Atomen in einem ersten internen Elektronenzustand in einer Falle, welche eine Bewegung der Atome auf einen Bereich innerhalb eines Torus beschränkt und Kühlen der Mehrzahl von Atomen in der Falle in einen Grundzustand, wobei sich die Atome mit quantisiertem Drehimpuls in derselben Richtung im Torus bewegen; Einstrahlen eines ersten Pulses eines ersten Analyse-Laserstrahls, insbesondere eines Laguerre-Gauß-Laserstrahls, und eines zweiten Analyse-Laserstrahls, insbesondere eines Gauß-Laserstrahls, auf die in der Falle gefangenen Atome zum Erzeugen einer gleichverteilten Superposition zwischen einem ersten und einem zweiten quantenmechanischen Drehimpulszustand einer Schwerpunktbewegung der Atome; Entwickeln der Atome in der Falle für eine Interrogationszeit; Einstrahlen eines zweiten Pulses des ersten und zweiten Analyse-Laserstrahls auf die Atome zum vollständigen Austauschen einer Population der Atome zwischen den beiden Drehimpulszuständen; Entwickeln der Atome in der Falle für eine Interrogationszeit; Einstrahlen eines dritten Pulses des ersten und zweiten Analyse-Laserstrahls auf die Atome zur Superposition der beiden quantenmechanischen Drehimpulszustände der Schwerpunktbewegung der Atome und zum Austausch wenigstens eines Teils der Population der Atome zwischen den beiden Drehimpulszuständen; Bestimmen der Population der Atome im ersten internen Elektronenzustand; Bestimmen der Winkelbeschleunigung aus der Population im ersten internen Elektronenzustand.

Nach dem vorgeschlagenen Verfahren wird durch interferometrische Mittel, wie der Interferenz von Materiewellen, direkt die Winkelbeschleunigung *Ω̇* einer externen Rotation gemessen. Dabei basiert das Verfahren auf einem quantenmechanischen Sensor. Eine Torus-Geometrie kompensiert Corioliskraft und Zentrifugalkraft, wodurch direkt die Eulerkraft gemessen wird. In dem Interferometer wird keine räumliche Fläche eingeschlossen und dadurch verschwindet die Sagnac-Phase.

Ein Hauptradius des Torus, welcher einen Abstand vom Mittelpunkt des Torus zum Mittelpunkt des Schlauchs des Torus beschreibt, kann dabei vorteilhaft deutlich größer als ein Nebenradius, welcher einen mittleren Radius des Schlauches beschreibt, gewählt werden. Dadurch entsteht ein schmaler Torus, sodass Bewegungen der Atome in dem Torus einer effektiven eindimensionalen Dynamik entlang des azimutalen Winkels unterliegen und keine relevanten Bewegungen der Atome in radialer Richtung auftreten.

Im Gegensatz zu existierenden klassischen, meist mechanischen Sensoren zur Messung der Winkelbeschleunigung wird nach dem vorgeschlagenen Verfahren das Verhalten von ultrakalten Quantengasen verwendet. Die Eulerkraft, die auf die Atome wirkt, äußert sich dabei in der Phase der Wellenfunktion und durch die Interferenzeigenschaften der Materiewellen kann dieser Effekt dann interferometrisch ausgelesen werden.

Anders als bereits bestehende Atom-Interferometer mit frei fallenden Atomen, die als Sensoren für die Winkelgeschwindigkeit Ω genutzt werden, kann eine torusförmige Dipolfalle verwendet werden, sodass der Einfluss von Corioliskraft und Zentrifugalkraft kompensiert wird.

Im Gegensatz zu existierenden Konzepten und Aufbauten von Torus-Materiewellen-Interferometern, bei denen Atome in beiden Richtungen um den Torus geführt werden und dadurch bei der Vereinigung eine Fläche einschließen, wodurch diese Sagnac-Interferometer daher auch sensitiv auf die Winkelgeschwindigkeit Ω sind, bewegen sich nach dem vorgeschlagenen Verfahren die Atome in derselben Richtung um den Torus. Dabei überfahren sie in den zwei möglichen Interferometerarmen zeitversetzt denselben Weg. Entsprechend wird keine räumliche Fläche eingeschlossen und die Sagnac-Phase verschwindet. Durch die Zeitversetzung der beiden Bewegungen kann dabei die Winkelbeschleunigung Ω̇ gemessen werden.

Ein Vorteil dieses Verfahrens ist neben der hohen Sensitivität die Driftfreiheit. Das bedeutet eine Unabhängigkeit von Kalibration mit anderen Sensoren und ist daher beispielsweise von Interesse im Bereich der inertialen/autonomen Navigation.

Ein Gauß-Strahl zeigt im Querschnitt ein Profil gemäß einer Gauß-Kurve mit einer längs der Ausbreitungsachse variierenden Breite. Der Strahl verjüngt sich näherungsweise linear bis zum Erreichen der schmalsten Stelle, die als Fokus oder Taille bezeichnet wird, und wächst danach ebenso wieder an. Längs der Ausbreitungsachse zeigt die räumliche Intensität des Strahls ein Lorentzprofil, das Maximum liegt an der Stelle der Taille.

Das elektromagnetische Feld des Gauß-Strahls ergibt sich aus den Maxwell-Gleichungen für konstante Frequenz ω, also aus der Helmholtz-Gleichung, nach paraxialer Näherung. Bei gegebener Ausbreitungsrichtung und Wellenlänge ist der Gauß-Strahl vollständig durch die Angabe des Orts und des Strahldurchmessers der Taille bestimmt.

Laguerre-Gauß-Strahlen sind typische Vortexstrahlen mit Bahndrehimpuls, spiralförmiger Wellenfrontphase und torusförmiger Intensitätsverteilung. Laguerre-Gauß-Strahlerzeugungsmethoden umfassen passive und aktive Methoden. Bei den passiven Methoden werden die Gauß-Strahlen außerhalb eines Resonators durch die Phasenelemente in Laguerre-Gauß-Strahlen moduliert; bei den aktiven Methoden werden die transversalen Moden hoher Ordnung im Resonanzraum direkt angeregt, um Laguerre-Gauß-Strahlen zu erhalten.

Gemäß dem vorgeschlagenen Verfahren lässt sich ein Zeitstrahl zur interferometrischen Messung der Winkelbeschleunigung erstellen.

Zunächst werden die Atome in einem ersten internen Elektronenzustand |1〉 präpariert und in den Bewegungs-Grundzustand der Falle mit einem verschwindenden Drehimpuls gekühlt.

Bei dem Zwei-Photonen-Übergang mit den beiden Analyse-Laserstrahlen wird durch die Absorption des Laguerre-Gauß -Laserstrahls ein Drehimpuls ℏl übertragen. Dadurch befinden sich die Atome nach dem Übergang im zweiten internen Elektronenzustand |2> und haben in der Schwerpunktbewegung den Drehimpulszustand ℏl.

Auf diese Weise sind in der Sequenz die Drehimpulszustände des externen Freiheitsgrades der Schwerpunktbewegung der Atome mit den internen Elektronenzuständen verknüpft.

Mit dem ersten Puls, einem sogenannten *π*/2-Puls, wird eine gleichverteilte Superposition des ersten Drehimpulszustands im ersten Elektronenzustand |1〉 und des zweiten Drehimpulszustands im zweiten Elektronenzustand |2〉 erzeugt. Der Teil der Atome, welcher sich im zweiten Drehimpulszustand und damit im zweiten Elektronenzustand befindet, rotiert dabei mit konstantem Drehimpuls ℏl in dem Torus der Falle. Die Atome im ersten Elektronenzustand |1〉 haben keinen Drehimpuls.

Vorteilhaft können die Populationen der beiden Drehimpulszustände sinusförmig als Funktion der kombinierten effektiven Pulsfläche verändert werden. Ist die Fläche so gewählt, dass die Population vollständig getauscht wird, spricht man von einem π-Puls. In diesem Fall ist die Fläche gleich π. Ist die Fläche halb so groß, handelt es sich um einen π/2-Puls.

Nach diesem Puls (bei einem Zeitpunkt *t* = 0) werden die Atome in der Falle für die Interrogationszeit T entwickelt.

Zum Zeitpunkt *t* = *T* wird ein zweiter Puls, ein *π*-Puls, angewendet. Dadurch werden die internen Elektronenzustände und die Drehimpulse getauscht. Die Atome im ersten Elektronenzustand |1〉 ohne Drehimpuls werden in den zweiten Elektronenzustand |2〉 mit Drehimpuls ℏl transferiert. Entsprechend wird der Anteil, der sich davor im zweiten Elektronenzustand |2〉 mit Drehimpuls ℏl befand, in den ersten internen Elektronenzustand |1〉 ohne Drehimpuls übergeführt.

Nach diesem Puls (bei *t = T*) werden die Atome wieder in der Falle für die Zeit T entwickelt.

Zum Zeitpunkt *t =* 2*T* wird mit einem dritten Puls, einem *π*/2-Puls, das Interferometer geschlossen.

Nach diesem Puls wird die Population im ersten internen Elektronenzustand |1〉 bestimmt, beispielsweise durch Mikrowellenanregung gefolgt von Absorptions-Bildgebung.

Aus der Population kann dann die Winkelbeschleunigung bestimmt werden.

Nach einer günstigen Ausgestaltung des Verfahrens kann die Population der Atome im ersten internen Elektronenzustand durch Mikrowellenanregung gefolgt von einer Absorption-Bildgebung bestimmt werden. Vorteilhaft lässt sich so die Population auf bewährte Weise bestimmen.

Nach einer günstigen Ausgestaltung des Verfahrens kann eine auf die Atome einwirkende Pulsfläche des ersten und dritten Pulses halb so groß sein wie eine auf die Atome einwirkende Pulsfläche des zweiten Pulses. Vorteilhaft können die Populationen der beiden Drehimpulszustände sinusförmig als Funktion der kombinierten effektiven Pulsfläche verändert werden. Ist die Fläche so gewählt, dass die Population vollständig getauscht wird, spricht man von einem π-Puls. In diesem Fall ist die Fläche gleich π. Ist die Fläche halb so groß, handelt es sich um einen π/2-Puls.

Nach einer günstigen Ausgestaltung des Verfahrens können der erste Analyse-Laserstrahl und der zweite Analyse-Laserstrahl phasengelockt sein. Auf diese Weise lassen sich die Populationen vorteilhaft tauschen.

Nach einer günstigen Ausgestaltung des Verfahrens kann die Winkelbeschleunigung aus einer Periode der Population im ersten internen Elektronenzustand für unterschiedliche Interrogationszeiten bestimmt werden. Insbesondere kann dabei die Winkelbeschleunigung aus der Periode der Population im ersten internen Elektronenzustand in Abhängigkeit eines Quadrats der Interrogationszeit bestimmt werden.

Vorteilhaft kann ein solcher Zusammenhang für die Bestimmung der Population ausgenutzt werden.

Nach einer günstigen Ausgestaltung des Verfahrens kann ein Raman-Übergang zwischen wenigstens zwei internen Elektronenzuständen durch den ersten und zweiten Analyse-Laserstrahl ausgelöst werden, wobei ein quantisierter Drehimpuls auf die Schwerpunktbewegung der Atome übertragen wird. Insbesondere können dabei durch den Raman-Übergang Rabi-Oszillationen zwischen den wenigstens zwei internen Elektronenzuständen bewirkt werden. Dabei können die Populationen in diesen sinusförmig als Funktion der kombinierten effektiven Pulsfläche verändert werden.

Nach einer günstigen Ausgestaltung des Verfahrens kann durch Einstrahlung des ersten und zweiten Analyse-Laserstrahls ein Übergang zwischen den wenigstens zwei Drehimpulszuständen der Schwerpunktbewegung der Atome auf die in der Falle gefangenen Atome bewirkt werden. Vorteilhaft lassen sich so die Populationen austauschen.

Nach einer günstigen Ausgestaltung des Verfahrens können die Atome in dem Torus lokalisiert werden und ein Übergang zwischen den wenigstens zwei Drehimpulszuständen der Schwerpunktbewegung der Atome durch Übertragung eines Impulses durch einen Bragg-Puls auf die in der Falle gefangenen Atome bewirkt werden. Alternativ kann zwischen zwei Drehimpulszuständen gewechselt werden, indem die Atome nicht auf dem gesamten Torus verteilt, sondern lokalisiert sind und an dieser Stelle ein sogenannter Bragg-Puls einen Impuls auf die Atome überträgt, ohne deren internen Elektronenzustand zu verändern.

Nach einer günstigen Ausgestaltung des Verfahrens kann die Falle eine optische Dipolfalle bilden, die durch Überlagerung eines Lichtblatts und eines Laserstrahls gebildet wird. Das Lichtblatt beschränkt die Atome entlang einer Raumachse auf ein in beiden Richtungen begrenztes, insbesondere ebenes, Raumsegment. Der Laserstrahl ist senkrecht zu dem Raumsegment orientiert und gibt ein ringförmiges Intensitätsprofil in dem Raumsegment aufweist und einen Torus vor. Dabei sind die Atome in dem Torus gefangen und eine Bewegung der Atome ist auf einen azimutalen Winkel beschränkt. Vorteilhaft lässt sich so eine Bewegung der Atome auf den Torus der optischen Dipolfalle beschränken.

Das Lichtblatt, im Englischen Lightsheet genannt, stellt dabei einen scheibenförmig ausgeleuchteten Bereich dar, welcher in einer Richtung quer zur Ausbreitungsrichtung quasi-eindimensional ausgebildet ist. Das Lichtblatt kann beispielsweise durch Scannen eines Laserstrahls quer zur Ausbreitungsrichtung erzeugt werden.

Nach einem weiteren Aspekt der Erfindung wird ein Sensor zur Durchführung eines Verfahrens zur Bestimmung einer Winkelbeschleunigung einer externen Rotation vorgeschlagen, umfassend eine Mehrzahl von, insbesondere ultra-kalten, Atomen, welche einen Übergang von einem energetischen Grundzustand zu wenigstens einem energetisch angeregten Zustand ihres Elektronensystems aufweisen, eine strahlungsinduzierte Falle, welche eine Bewegung der Atome auf einen Torus beschränkt, wobei die Atome wenigstens einen ersten und einen zweiten internen Elektronenzustand aufweisen, mit welchen die Atome in der Falle gefangen sind, sowie ein Mittel, um zwischen den wenigstens zwei internen Elektronenzuständen mit einem Drehimpulsübertrag auf die Schwerpunktbewegung der Atome kohärent zu wechseln.

Vorteilhaft kann zur Durchführung des vorgeschlagenen Verfahrens ein Sensor verwendet werden, welcher ultra-kalte Atome mit einem geeigneten Übergang von Elektronenzuständen aufweist. Weiter umfasst der Sensor eine Falle für die Atome, welche die Bewegung der Atome auf einen Torus beschränkt. Die in der Falle gefangenen Atome weisen zwei spezifische Drehimpulszustände auf. Weiter weist der Sensor die Möglichkeit auf, zwischen den beiden internen Elektronenzuständen mit einem Drehimpulsübertrag auf die Schwerpunktbewegung der Atome kohärent zu wechseln. Dadurch kann effektiv ein System aus zwei Drehimpulszuständen realisiert und angewendet werden.

Derartige Sensoren funktionieren in abgewandelter Form, beispielsweise mit unterschiedlichen Atomen, unterschiedlichen Übergängen, unterschiedlichen Funktionsweisen der torusförmigen Falle oder unterschiedlichen Zwei-Photonen-Übergängen, solange diese einen effektiven Drehimpuls übertragen. Außerdem kann auf alternative Weise zwischen zwei Drehimpulszuständen gewechselt werden, indem die Atome nicht auf dem gesamten Torus verteilt, sondern lokalisiert sind und an dieser Stelle ein sogenannter Bragg-Puls einen Impuls auf die Atome überträgt, ohne deren internen Elektronenzustand zu verändern.

Nach einer günstigen Ausgestaltung des Sensors kann die Winkelbeschleunigung durch eine Bestimmung einer jeweiligen Population der Atome in den wenigstens zwei Drehimpulszuständen der Schwerpunktbewegung der Atome bestimmbar sein. Dabei kann vorteilhaft ein Zusammenhang zwischen Winkelbeschleunigung und zeitabhängiger Population ausgenutzt werden.

Nach einer günstigen Ausgestaltung des Sensors kann die Winkelbeschleunigung aus einer Periode der Population im ersten Drehimpulszustand für unterschiedliche Interrogationszeiten bestimmbar sein. Insbesondere kann dabei die Winkelbeschleunigung aus der Periode der Population im ersten Drehimpulszustand in Abhängigkeit eines Quadrats der Interrogationszeit bestimmbar sein. Vorteilhaft kann ein solcher Zusammenhang für die Bestimmung der Population ausgenutzt werden.

Nach einer günstigen Ausgestaltung des Sensors kann eine Einrichtung zur Bildgebung vorliegen, mit der die Population durch Mikrowellenanregung gefolgt von einer Absorptions-Bildgebung bestimmbar ist. Vorteilhaft lässt sich so die Population auf bewährte Weise bestimmen.

Nach einer günstigen Ausgestaltung des Sensors können die Atome Natriumatome sein, welche einen Übergang eines Valenzelektrons vom 3²*S*_{1/2} Grundzustand in den angeregten 3²*P*_{3/2} Zustand aufweisen. Mit einem solchen System lässt sich vorteilhaft ein Sensor für das vorgeschlagene Verfahren realisieren.

Nach einer günstigen Ausgestaltung des Sensors kann die Falle als optische Dipolfalle ausgebildet sein, die durch Überlagerung eines Lichtblatts und eines Laserstrahls gebildet ist. Eine Bewegung der Atome ist durch das Lichtblatt entlang einer Raumachse auf ein in beiden Richtungen begrenztes, insbesondere ebenes, Raumsegment beschränkt. Der Laserstrahl ist quer, insbesondere senkrecht, zu dem Raumsegment orientiert und weist ein ringförmiges Intensitätsprofil in dem Raumsegment auf und gibt einen Torus vor. Dabei sind die Atome in dem Torus gefangen und eine Bewegung der Atome ist auf einen azimutalen Winkel beschränkt. Vorteilhaft lässt sich so eine Bewegung der Atome auf den Torus der optischen Dipolfalle beschränken.

Nach einer günstigen Ausgestaltung des Sensors kann ein Magnetfeld parallel zu dem Lichtblatt angelegt sein, durch welches eine Zeeman-Aufspaltung eines Gesamtdrehimpulses der Atome in die wenigstens zwei internen Elektronenzustände ausgebildet ist. Mittels des Magnetfelds lässt sich vorteilhaft ein quadratischer Zeeman-Effekt ausnutzen, sodass die Übergangsfrequenzen zwischen verschiedenen Übergängen nicht gleich sind.

Nach einer günstigen Ausgestaltung des Sensors können als Mittel ein erster Analyse-Laserstrahl, insbesondere ein Laguerre-Gauß-Laserstrahl, sowie ein zweiter Analyse-Laserstrahl, insbesondere ein Gauß-Laserstrahl, parallel zu dem ersten Analyse-Laserstrahl ausgebildet sein. Dabei weisen der erste und der zweite Analyse-Laserstrahl einen Frequenzunterschied auf, welcher einem Energieunterschied zwischen den wenigstens zwei internen Elektronenzuständen entspricht. Auf diese Weise lassen sich Populationen zwischen den verschiedenen Drehimpulszuständen vorteilhaft austauschen.

Nach einer günstigen Ausgestaltung des Sensors können der erste und zweite Analyse-Laserstrahl zueinander phasengelockt sein. Auf diese Weise lassen sich die Populationen vorteilhaft tauschen.

Nach einer günstigen Ausgestaltung des Sensors können der erste und zweite Analyse-Laserstrahl zum Auslösen eines Raman-Übergangs zwischen den wenigstens zwei internen Elektronenzuständen ausgebildet sein, wobei ein quantisierter Drehimpuls auf die Schwerpunktbewegung der Atome übertragbar ist. Insbesondere können dabei durch den Raman-Übergang Rabi-Oszillationen zwischen den wenigstens zwei internen Elektronenzuständen der Atome vorliegen. Dabei können die Populationen in diesen sinusförmig als Funktion der kombinierten effektiven Pulsfläche verändert werden.

Nach einer günstigen Ausgestaltung des Sensors kann ein Übergang zwischen den wenigstens zwei Drehimpulszuständen der Schwerpunktbewegung der Atome durch Einstrahlung des ersten und zweiten Analyse-Laserstrahls auf die in der Falle gefangenen Atome bewirkbar sein. Auf diese Weise lassen sich die Populationen der wenigstens zwei Drehimpulszustände vorteilhaft tauschen.

Nach einer günstigen Ausgestaltung des Sensors können die Atome in dem Torus lokalisiert sein und ein Übergang zwischen den wenigstens zwei Drehimpulszuständen der Schwerpunktbewegung der Atome durch Übertragung eines Impulses durch einen Bragg-Puls auf die in der Falle gefangenen Atome bewirkbar sein. Alternativ kann zwischen zwei Drehimpulszuständen gewechselt werden, indem die Atome nicht auf dem gesamten Torus verteilt, sondern lokalisiert sind und an dieser Stelle ein sogenannter Bragg-Puls einen Impuls auf die Atome überträgt, ohne deren internen Elektronenzustand zu verändern.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: ein Energieschema eines Interferometers eines Sensors zur Bestimmung einer Winkelbeschleunigung einer externen Rotation mit einem Verfahren nach einem Ausführungsbeispiel der Erfindung;
- Fig. 2: eine optische Dipolfalle des Sensors in schematischer Darstellung;
- Fig. 3: eine Population von Atomen in einem ersten Drehimpulszustand als Funktion eines Quadrats einer Interrogationszeit; und
- Fig. 4: ein Blockschema eines Sensors zur Bestimmung einer Winkelbeschleunigung einer externen Rotation nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

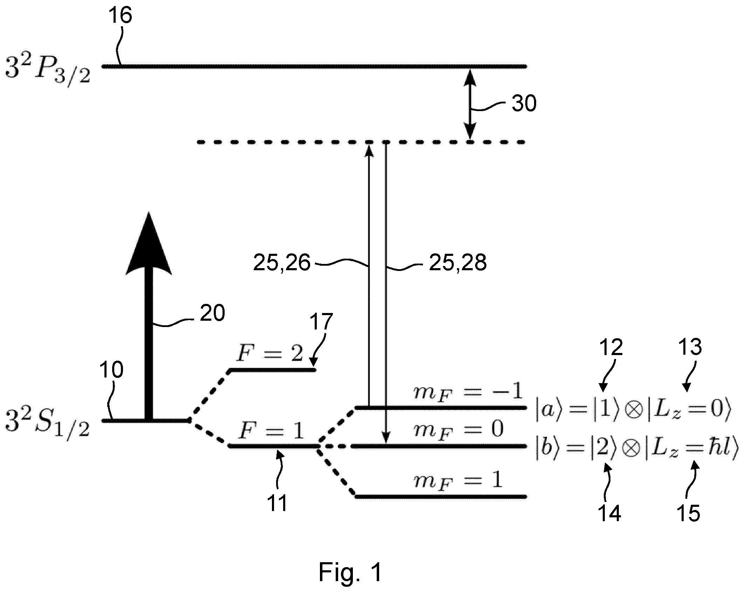

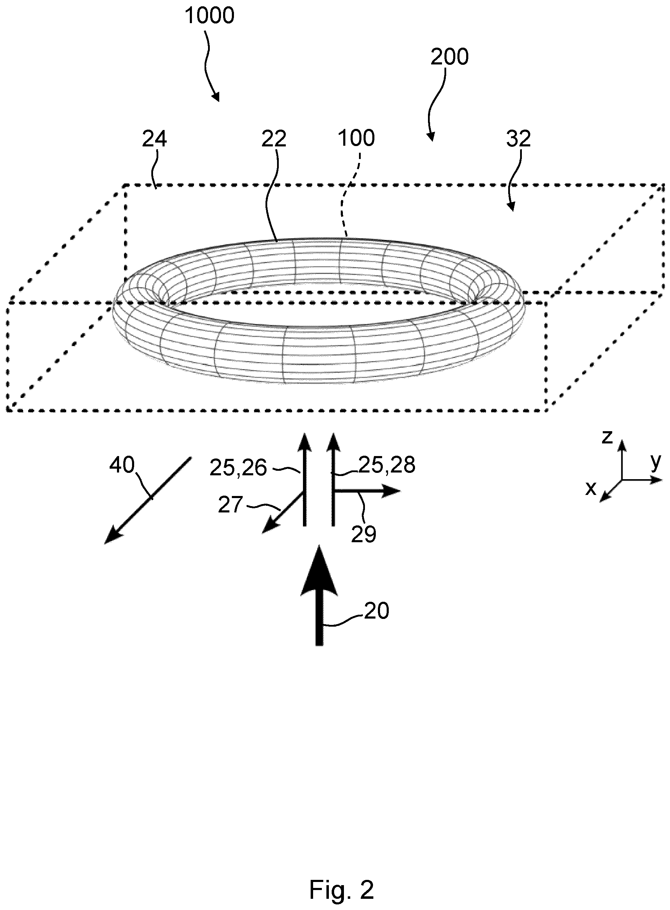

Figur 1 zeigt ein Energieschema eines Interferometers eines Sensors 1000 zur Bestimmung einer Winkelbeschleunigung *Ω̇* einer externen Rotation mit einem Verfahren nach einem Ausführungsbeispiel der Erfindung. In Figur 2 ist eine optische Dipolfalle 200 des Sensors 1000 schematisch dargestellt.

Der Sensor 1000 umfasst eine Mehrzahl von, insbesondere ultra-kalten, Atomen 100, welche einen Übergang von einem energetischen Grundzustand 10 zu wenigstens einem energetisch angeregten Zustand 16 ihres Elektronensystems aufweisen, eine strahlungsinduzierte Falle 200, welche eine Bewegung der Atome 100 auf einen Torus 22 beschränkt, wobei die Atome 100 wenigstens einen ersten und einen zweiten internen Elektronenzustand 12, 14 aufweisen, mit welchen die Atome 100 in der Falle 200 gefangen sind, sowie ein Mittel 25, um zwischen den wenigstens zwei internen Elektronenzustand 12, 14 mit einem Drehimpulsübertrag auf die Schwerpunktbewegung der Atome 100 kohärent zu wechseln.

Ein Hauptradius des Torus 22, welcher einen Abstand vom Mittelpunkt des Torus 22 zum Mittelpunkt des Schlauchs des Torus 22 beschreibt, kann dabei vorteilhaft deutlich größer als ein Nebenradius, welcher einen mittleren Radius des Schlauches beschreibt, gewählt werden. Dadurch entsteht ein schmaler Torus 22, sodass Bewegungen der Atome 100 in dem Torus 22 einer effektiven eindimensionalen Dynamik entlang des azimutalen Winkels unterliegen und keine relevanten Bewegungen der Atome 100 in radialer Richtung auftreten.

Die Winkelbeschleunigung *Ω̇* kann durch eine Bestimmung einer jeweiligen Population 50 der Atome 100 in den wenigstens zwei internen Elektronenzuständen 12, 14 der Schwerpunktbewegung der Atome 100 bestimmt werden.

Als Mittel 25 sind ein erster Analyse-Laserstrahl 26, insbesondere ein Laguerre-Gauß-Laserstrahl, sowie ein zweiter Analyse-Laserstrahl 28, insbesondere ein Gauß-Laserstrahl, parallel zu dem ersten Analyse-Laserstrahl 26 ausgebildet, wobei der erste und der zweite Analyse-Laserstrahl 26, 28 einen Frequenzunterschied aufweisen, welcher einem Energieunterschied zwischen den wenigstens zwei internen Elektronenzuständen 12, 14 entspricht. Der erste und zweite Analyse-Laserstrahl 26, 28 können vorteilhaft zueinander phasengelockt sein.

Durch Einstrahlung des ersten und zweiten Analyse-Laserstrahls 26, 28 auf die in der Falle 200 gefangenen Atome 100 kann ein Übergang zwischen wenigstens zwei Drehimpulszuständen 13, 15 der Schwerpunktbewegung der Atome 100 bewirkt werden.

Alternativ können die Atome 100 in dem Torus 22 lokalisiert sein und ein Übergang zwischen den wenigstens zwei Drehimpulszuständen 13, 15 der Schwerpunktbewegung der Atome 100 durch Übertragung eines Impulses durch einen Bragg-Puls auf die in der Falle 200 gefangenen Atome 100 bewirkt werden.

Die Atome 100 können beispielsweise Natriumatome (²³Na) sein, welche einen Übergang eines Valenzelektrons vom 3²*S*_{1/2} Grundzustand 10 in den angeregten 3²*P*_{3/2} Zustand 16 aufweisen.

Dabei kann die optische Spektrallinie D₂ (*λ*_{D2} ≈ 589 nm) zur Manipulation der Atome 100 angesprochen werden. Die D₂ Linie entspricht dem Übergang des Valenzelektrons vom 3²*S*_{1/2} Grundzustand 10 in den angeregten 3²*P*_{3/2} Zustand 16, der durch die Spin-Bahn-Kopplung vom 3²*P*_{1/2} Zustand entartet ist.

In Figur 1 sind die D₂ Linie und die verwendeten Energieniveaus für das Interferometer des Sensors 1000 dargestellt. Der dicke Pfeil entspricht dem Laguerre-Gauß-Laserstrahl 20 der Dipolfalle 200 und zeigt deren Frequenz. Diese ist weit verstimmt vom Übergang und erzeugt so die torusförmige Falle 200 für alle Zustände der 3²*S*_{1/2} Mannigfaltigkeit. Das Raman-Strahlenpaar des Laguerre-Gauß-Laserstrahls 26 in Kombination mit dem Gauß-Laserstrahl 28 ist gegen die D₂-Linie verstimmt, aber zusammen resonant auf den |1〉 ↔ |2〉 Übergang. Die Wahl der jeweiligen Polarisationen 27, 29 (Figur 2) und der quadratische Zeeman-Effekt führt dann zu einem effektiven Zwei-Level-System.

Um die Natriumatome räumlich zu fangen wird eine optische Dipolfalle 200 verwendet wie beispielsweise in Ramanathan, A. K. (2011). A ring with a spin: Superfluidity in a toroidal Bose-Einstein condensate. University of Maryland, College Park und in Ramanathan, A., Wright, K. C., Muniz, S. R., Zelan, M., Hill III, W. T., Lobb, C. J., ... & Campbell, G. K. (2011). Superflow in a toroidal Bose-Einstein condensate: an atom circuit with a tunable weak link. Physical Review Letters, 106(13), 130401 dargestellt.

Bei dieser Dipolfalle 200 wird Licht mit einer Rotverschiebung (ω_{Diopol} - ω_{D2} < 0, wobei ω_{D2} = [*E*(3²P_{3/2}) - *E*(3²S_{1/2})]/ℏ*,* Figur 1) zum D₂ Übergang verwendet: λ_{Diopol} ≈ 1030 nm), wodurch die Atome ein Potential proportional zur Lichtintensität spüren und in Regionen hoher Intensität gefangen werden können. Um nun eine torusförmige Falle 200 für die Atome 100, wie in Figur 2 gezeigt, darzustellen, werden zwei Fallen kombiniert. Zum einen wird ein sogenanntes ein Lichtblatt 24 in Form eines, insbesondere ebenen, Raumsegments 32 genutzt, welches die Atome 100 effektiv in z-Richtung auf die z = 0 Ebene beschränkt.

Das Lichtblatt 24, im Englischen Lightsheet genannt, stellt dabei einen scheibenförmig ausgeleuchteten Bereich dar, welcher in einer Richtung z quer zur Ausbreitungsrichtung y quasi-eindimensional ausgebildet ist. Das Lichtblatt 24 kann beispielsweise durch Scannen eines Laserstrahls quer zur Ausbreitungsrichtung y erzeugt werden.

Außerdem wird ein Laguerre-Gauß-Laserstrahl 26 verwendet, der sich entlang der z- Achse ausbreitet. Das räumliche Intensitätsprofil orthogonal zur Ausbreitungsrichtung des Laguerre-Gauß-Laserstrahls 26 ist durch einen radialen Parameter *p* und einen azimutalen Index *l* gegeben. Durch die Wahl *p* = 0 und *l* ≥ 1 wird ein torusförmiges Intensitätsprofil erzeugt. Zusammen ergibt sich eine optische Dipolfalle 200, welche die ²³Na Atome im 3²*S*_{1/2} Grundzustand 10 auf einem Torus 22 fängt und so die Bewegung der Atome 100 auf den azimutalen Winkel *φ* beschränkt, wie in Figur 2 erkennbar.

Figur 2 zeigt die Dipolfalle 200, bestehend aus dem Lichtblatt 24 in Form des, insbesondere ebenen, Raumsegments 32, welches die Atome 100 in z-Richtung auf der Ebene z = 0 fängt, und dem Laguerre-Gauß-Laserstrahl 20 (dicker Pfeil). Zusammen erzeugt dies effektiv eine Falle 200 in Form eines Torus 22 für die ²³Na Atome. Der Raman-Übergang wird durch den Laguerre-Gauß-Laserstrahl als erstem Analyse-Laserstrahl 26 in Kombination mit dem Gauß-Laserstrahl als zweitem Analyse-Laserstrahl 28 (dünnere Pfeile) erzeugt, wobei die Polarisationen 27, 29 im Verhältnis zum Magnetfeld 40 (B) dargestellt sind und entsprechend gewählt wurden, um den Übergang zu ermöglichen.

Die Falle 200 ist als optische Dipolfalle ausgebildet, die durch Überlagerung des Lichtblatts 24 und des Laserstrahls 20 gebildet ist. Dabei ist eine Bewegung der Atome 100 durch das Lichtblatt 24 entlang der Raumachse z auf das in beiden Richtungen begrenzte, insbesondere ebene, Raumsegment 32 beschränkt. Der Laserstrahl 20 ist quer, insbesondere senkrecht, zu dem Raumsegment 32 orientiert und weist ein ringförmiges Intensitätsprofil in dem Raumsegment 32 auf und gibt einen Torus 22 vor. Die Atome 100 sind in dem Torus 22 gefangen. Eine Bewegung der Atome 100 ist so auf einen azimutalen Winkel beschränkt.

Das Magnetfeld 40 ist parallel zu dem Lichtblatt 24 angelegt, durch welches eine Zeeman-Aufspaltung des Gesamtdrehimpulses 11 der Atome 100 in die wenigstens zwei internen Elektronenzustände 12, 14 ausgebildet ist.

Für den interferometrischen Aufbau des Sensors 1000 werden zwei Elektronenzustände 12, 14 eingesetzt, zwischen denen kohärent gewechselt werden kann. Dafür kann der 3²*S*_{1/2} Grundzustand 10 in der Hyperfeinstruktur eingesetzt werden, welche durch die Wechselwirkung der Elektronen mit dem Kern entsteht. Dadurch spaltet sich das Energieniveau in zwei Zustände 11, 17 mit den Gesamtdrehimpulsen *F* = 1 und *F* = 2, siehe Figur 1. Ein angelegtes konstantes Magnetfeld 40 spaltet durch den Zeeman-Effekt den *F* = 1 Zustand 11 weiter in drei Energielevel (*m_{F} = 0, m_{F} =* ±1) auf. Die Stärke des Magnetfelds 40 ( *B* ≈ 5 G) ist dabei so gewählt, dass durch den quadratischen Zeeman-Effekt die Übergangsfrequenzen |*F = 1, m_{F}* = -1) ↔ |*F* = 1, *m_{F}* = 0〉 und |*F* = 1, *m_{F}* = 0〉 ↔ |*F =* 1, *m_{F}* = 1) nicht gleich sind. Zur Interferometrie werden dann der erste interne Elektronenzustand 12 |1〉 = |*F =* 1, *m_{F}* = -1〉 und der zweite interne Elektronenzustand 14 |2〉 = |*F =* 1, *m_{F}* = 0〉 betrachtet.

Um einen Übergang zwischen diesen beiden internen Elektronenzuständen 12, |1〉 und 14 |2〉 des 3²*S*_{1/2} Niveaus herzustellen, wird eine Kombination aus dem Gauß-Laserstrahl als zweitem Analysestrahl 28 und dem Laguerre-Gauß-Laserstrahl als erstem Analysestrahl 26, mit *p* = 0 und *l* ≥ 1, verwendet. Diese propagieren dabei in z-Richtung (Figur 2), also in Richtung der Symmetrieachse des Torus 22. Zu der D₂ Linie haben sie eine Verstimmung 30 (Δ ≈ -2,3 GHz), wodurch keine Übergänge zum angeregten Zustand 16 mit einem einzigen Strahl möglich sind. Die Frequenz des Gauß-Laserstrahls 28 ist dabei um den Frequenzunterschied |1〉 ↔ |2〉 größer als die des Laguerre-Gauß-Laserstrahls 26. Zusammen sind sie daher, wie in Figur 1 zu sehen, resonant mit dem Übergang |1〉 ↔ |2〉. Die lineare Polarisation 27 (*ê*_{LG}) des Laguerre-Gauß-Laserstrahls 26, die parallel zu dem externen Magnetfeld 40 liegt (in Figur 2 entlang der x-Achse), führt dazu, dass durch diesen Strahl nur Übergänge mit Δ*m_{F}* = 0 möglich sind. Dagegen ist die lineare Polarisation 29 (*ê_{G}*) des Gauß-Strahls 28 senkrecht (in Bild 2 entlang der *y*-Achse) zum externen Magnetfeld 40 und führt zu Übergängen mit Δ*m_{F}* = ±1. Zusammen ist daher durch Absorption des Laguerre-Gauß-Laserstrahls 26 und Emission in die Gauß-Mode der Übergang |1〉 → |2〉 möglich und resonant. Dabei wird durch die Absorption des Laguerre-Gauß-Laserstrahls 26 der Drehimpuls ℏl auf die Schwerpunktbewegung der Atome 100 übertragen. Der Übergang von |2〉 zum Zustand |*F =* 1, *m_{F}* = 1) ist zudem durch den quadratischen Zeeman-Effekt so weit verstimmt, im Verhältnis zur effektiven Rabifrequenz, dass er vernachlässigbar ist. Als Resultat ergibt sich ein effektives Zwei-Level-System der internen Elektronenzustände 12, |1〉 , und 14, |2〉 , wobei der zweite interne Elektronenzustand 14 mit einem um ℏl höheren Drehimpuls in der Atombewegung assoziiert ist.

Damit sind interner Elektronenzustand und externe Atombewegung miteinander gekoppelt und die Produktzustände des Interferometers sind |*a*〉 = |1〉 ⊗ |*L_{z}* = 0〉 (erster interner Elektronenzustand 12 und kein Drehimpuls) und |*b*〉 = |2〉 ⊗ |*L_{z} = ℏl*〉 (zweiter interner Elektronenzustand 14 und Drehimpuls ℏl). Mit dem Zwei-Photonen-Raman-Übergang entsteht eine effektive Rabi-Oszillation zwischen diesen beiden Zuständen. Dabei können die Populationen 50 in diesen sinusförmig als Funktion der kombinierten effektiven Pulsfläche verändert werden. Ist die Fläche so gewählt, dass die Population 50 vollständig getauscht wird, spricht man von einem π-Puls. In diesem Fall ist die Fläche gleich π. Ist die Fläche halb so groß, handelt es sich um einen π/2-Puls.

Der erste und zweite Analyse-Laserstrahl 26, 28 sind zum Auslösen eines Raman-Übergangs zwischen den wenigstens zwei internen Elektronenzuständen 12, 14 ausgebildet, wobei ein quantisierter Drehimpuls auf die Schwerpunktbewegung der Atome 100 übertragen wird. Insbesondere liegen durch den Raman-Übergang Rabi-Oszillationen zwischen den wenigstens zwei internen Elektronenzuständen 12, 14 der Atome 100 vor.

Gemäß dem vorgeschlagenen Verfahren lässt sich ein Zeitstrahl zur interferometrischen Messung der Winkelbeschleunigung *Ω̇* erstellen.

Zunächst werden die Atome 100 im ersten internen Elektronenzustand 12, |1〉, präpariert und in den Bewegungs-Grundzustand 10 der Falle 200 mit einem verschwindenden Drehimpuls gekühlt.

Beim dem Zwei-Photonen-Übergang mit den beiden Analyse-Laserstrahlen 26, 28 wird durch die Absorption des Laguerre-Gauß-Laserstrahls 26 ein Drehimpuls ℏl übertragen. Dadurch befinden sich die Atome 100 nach dem Übergang im zweiten internen Elektronenzustand 14 |2> und haben in der Schwerpunktbewegung den Drehimpulszustand ℏl.

Auf diese Weise sind in der Sequenz die Drehimpulszustände 13 (*L_{z}* = 0), 15 (*L_{z}* = ℏl) der externen Freiheitsgrade der Schwerpunktbewegung der Atome 100 mit den internen Elektronenzuständen 12, 14 verknüpft, wie in Figur 1 dargestellt.

Mit einem ersten Puls, einem sogenannten *π*/2-Puls, wird eine gleichverteilte Superposition des ersten Drehimpulszustands 13 im internen Elektronenzustand |1〉, und des zweiten Drehimpulszustands 15 im internen Elektronenzustand |2〉, der Schwerpunktbewegung der Atome 100 erzeugt. Der Teil der Atome 100, welcher sich im zweiten internen Elektronenzustand 14, |2〉, befindet, rotiert dabei mit konstantem Drehimpuls *L_{z}* = ℏl um den Torus der Falle. Die Atome 100 im ersten internen Elektronenzustand 12, |1〉, haben keinen Drehimpuls (*L_{z}* = 0).

Nach diesem Puls (bei einem Zeitpunkt *t* = 0) werden die Atome 100 in der Falle 200 für die Interrogationszeit T entwickelt.

Zum Zeitpunkt *t = T* wird ein zweiter Puls, ein *π*-Puls, angewendet. Dadurch werden die internen Zustände und die Drehimpulse getauscht. Die Atome 100 im ersten internen Elektronenzustand 12, |1〉, ohne Drehimpuls werden in den zweiten internen Elektronenzustand 14, |2〉, mit Drehimpuls ℏl transferiert. Entsprechend wird der Anteil, der sich davor im zweiten internen Elektronenzustand 14, |2〉, mit Drehimpuls ℏl befand, in den ersten internen Elektronenzustand 12, |1〉, ohne Drehimpuls übergeführt.

Nach diesem Puls (bei *t = T*) werden die Atome 100 wieder in der Falle 200 für die Zeit T entwickelt.

Zum Zeitpunkt *t = 2T* wird mit einem dritten Puls, einem π/2-Puls, das Interferometer geschlossen.

Nach diesem Puls wird die Population 50 im ersten internen Elektronenzustand 12, |1〉, bestimmt, beispielsweise durch Mikrowellenanregung gefolgt von Absorptions-Bildgebung.

Die resultierende relative Population 50, *P*₁₁, im ersten internen Elektronenzustand 12, |1〉, nach dieser Sequenz hängt ab von der akkumulierten Phase während der Interferometersequenz. Der analytische Ausdruck dieser Population 50 ist gegeben durch: ${P}_{11} = \frac{1}{2} \left[1+cos\left(l\dot{Ω}{T}^{2}-{δΦ}_{L}\right)\right] .$

Hierbei ist *l* der azimutale Index des Laguerre-Gauß-Laserstrahls 26, welcher dem übertragenen Drehimpuls ℏl beim Zustandswechsel entspricht. Der Beitrag ${δΦ}_{L} = {Φ}_{L} \left(2T\right) - 2 {Φ}_{L} \left(T\right) + {Φ}_{L} \left(0\right)$ entsteht durch die Phase *Φ*_{L}(*t*) der phasengelockten Analyselaser 26, 28 bei den *π*- und *π*/2-Pulsen.

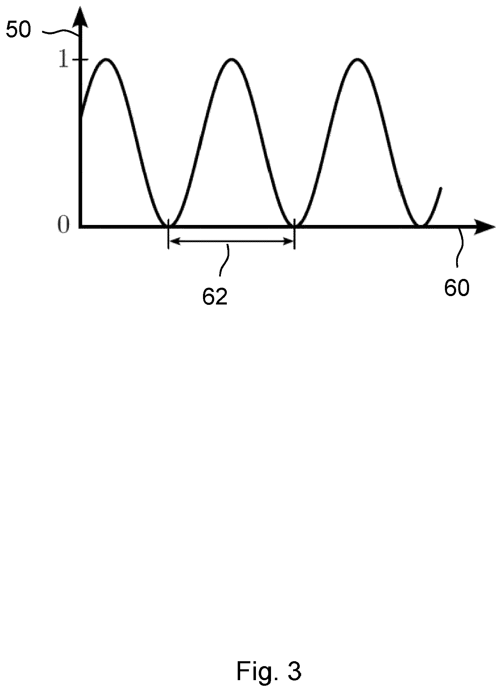

In Figur 3 ist eine Population 50 von Atomen 100 in einem ersten internen Elektronenzustand 12 als Funktion eines Quadrats 60 einer Interrogationszeit T dargestellt.

Für eine fixe Laserphase *δ*Φ_{L} wird die resultierende relative Population 50 im ersten internen Elektronenzustand 12, |1〉, für unterschiedliche Interrogationszeiten T bestimmt. Wird die Population 50, *P*₁₁ , als Funktion von *T*² aufgetragen, wie in Figur 3 gezeigt, ergib sich ein oszillierendes Verhalten mit der Periode 62, 2*π*/(lΩ̇). Daher kann aus dieser Messreihe direkt die Winkelbeschleunigung *Ω̇* bestimmt werden.

Die Winkelbeschleunigung *Ω̇* kann so aus der Periode 62 der Population 50 im ersten internen Elektronenzustand 12 für unterschiedliche Interrogationszeiten bestimmt werden. Insbesondere kann die Winkelbeschleunigung *Ω̇* aus der Periode 62 der Population 50 im ersten internen Elektronenzustand 12 in Abhängigkeit eines Quadrats 60 der Interrogationszeit bestimmt werden.

Vorteilhaft können unterschiedliche Atome 100 für das vorgeschlagene Verfahren verwendet werden.

Das Ergebnis hängt nicht vom Radius des Torus 22 der Falle 200 und der Masse der Atome 100 ab.

Die Sensitivität ist äquivalent zum bekannten Mach-Zehnder-Interferometer und skaliert daher nach $∼ 1 / \left(l\sqrt{N}{T}^{2}\right)$, wobei *N* die Anzahl der Atome 100 in der Falle 200 beschreibt.

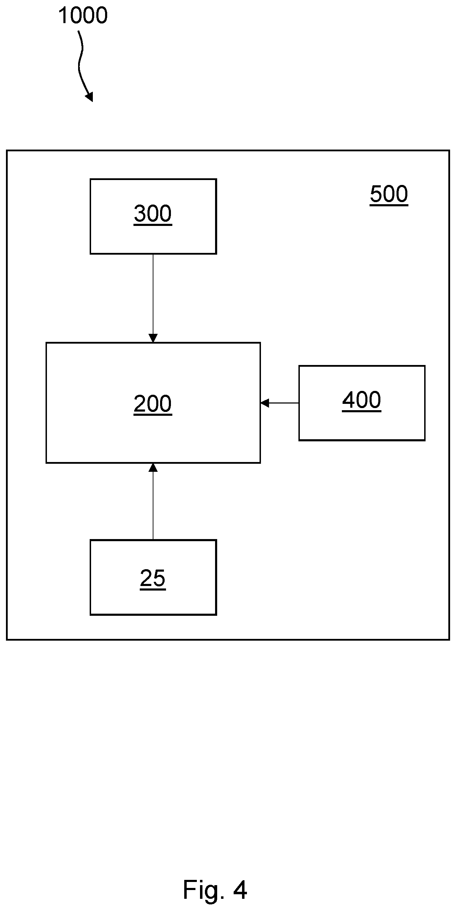

Figur 4 zeigt ein Blockschema eines Sensors 1000 zur Bestimmung einer Winkelbeschleunigung *Ω̇* einer externen Rotation nach einem Ausführungsbeispiel der Erfindung.

Der Sensor 1000 umfasst die Falle 200, deren darin enthaltenen Atome 100 mittels einer Kühleinrichtung 400 auf eine vorzugsweise ultra-kalte Temperatur gekühlt werden.

Weiter umfasst der Sensor 1000 ein Mittel 25, um zwischen den wenigstens zwei internen Elektronenzuständen 12, 14 der Atome 100 in der Falle 200 kohärent zu wechseln sowie eine Einrichtung 300 zur Bildgebung, mit der die Population 50 durch Mikrowellenanregung gefolgt von einer Absorptions-Bildgebung bestimmt werden kann.

Falle 200, Mittel 25, Einrichtung 300 sowie die Kühleinrichtung 400 können vorzugsweise in einem Gehäuse 500 angeordnet sein. Wahlweise kann beispielsweise die Kühleinrichtung 400 auch außerhalb des Gehäuses 500 angeordnet sein.

### Bezugszeichen

- 10: Grundzustand
- 11: Gesamtdrehimpuls
- 12: erster interner Elektronenzustand
- 13: erster Drehimpulszustand
- 14: zweiter interner Elektronenzustand
- 15: zweiter Drehimpulszustand
- 16: angeregter Zustand
- 17: Gesamtdrehimpuls
- 20: Laserstrahl
- 22: Torus
- 24: Lichtblatt
- 25: Mittel
- 26: erster Analyse-Laserstrahl
- 27: Polarisation erster Analyse-Laserstrahl
- 28: zweiter Analyse-Laserstrahl
- 29: Polarisation zweiter Analyse-Laserstrahl
- 30: Verstimmung
- 32: Raumsegment
- 40: Magnetfeld
- 50: Population
- 60: Quadrat der Interrogationszeit
- 62: Periode
- 100: Atom
- 200: Falle
- 300: Einrichtung
- 400: Kühleinrichtung
- 500: Gehäuse
- 1000: Sensor

## Patentansprüche

1. Verfahren zur Bestimmung einer Winkelbeschleunigung einer externen Rotation, umfassend
Präparieren einer Mehrzahl von Atomen (100) in einem ersten internen Elektronenzustand (12) in einer Falle (200), welche eine Bewegung der Atome (100) auf einen Bereich innerhalb eines Torus (22) beschränkt, und Kühlen der Mehrzahl von Atomen (100) in der Falle (200) in einen Grundzustand (10), wobei sich die Atome (100) mit quantisiertem Drehimpuls in derselben Richtung im Torus bewegen;
Einstrahlen eines ersten Pulses eines ersten Analyse-Laserstrahls (26), insbesondere eines Laguerre-Gauß-Laserstrahls, und eines zweiten Analyse-Laserstrahls (28), insbesondere eines Gauß-Laserstrahls, auf die in der Falle (200) gefangenen Atome (100) zum Erzeugen einer gleichverteilten Superposition zwischen einem ersten und einem zweiten quantenmechanischen Drehimpulszustand (13, 15) einer Schwerpunktbewegung der Atome (100);
Entwickeln der Atome (100) in der Falle (200) für eine Interrogationszeit;
Einstrahlen eines zweiten Pulses des ersten und zweiten Analyse-Laserstrahls (26, 28) auf die Atome (100) zum vollständigen Austauschen einer Population (50) der Atome (100) zwischen den beiden Drehimpulszuständen (13, 15);
Entwickeln der Atome (100) in der Falle (200) für eine Interrogationszeit;
Einstrahlen eines dritten Pulses des ersten und zweiten Analyse-Laserstrahls (26, 28) auf die Atome (100) zur Superposition der beiden Drehimpulszustände (13, 15) der Schwerpunktbewegung der Atome (100) und zum Austausch wenigstens eines Teils der Population (50) der Atome (100) zwischen den beiden Drehimpulszuständen (13, 15);
Bestimmen der Population (50) der Atome (100) im ersten internen Elektronenzustand (12);
Bestimmen der Winkelbeschleunigung aus der Population (50) im ersten internen Elektronenzustand (12).

2. Verfahren nach Anspruch 1, wobei die Population (50) der Atome (100) im ersten internen Elektronenzustand (12) durch Mikrowellenanregung gefolgt von einer Absorption-Bildgebung bestimmt wird.

3. Verfahren nach Anspruch 1 oder 2, wobei eine auf die Atome (100) einwirkende Pulsfläche des ersten und dritten Pulses halb so groß ist wie eine auf die Atome (100) einwirkende Pulsfläche des zweiten Pulses,
und/oder
wobei der erste Analyse-Laserstrahl (26) und der zweite Analyse-Laserstrahl (28) phasengelockt sind.

4. Verfahren nach einem der vorhergehenden Ansprüche, wobei die Winkelbeschleunigung aus einer Periode (62) der Population (50) im ersten internen Elektronenzustand (12) für unterschiedliche Interrogationszeiten bestimmt wird,
insbesondere wobei die Winkelbeschleunigung aus der Periode (62) der Population (50) im ersten internen Elektronenzustand (12) in Abhängigkeit eines Quadrats (60) der Interrogationszeit bestimmt wird.

5. Verfahren nach einem der vorhergehenden Ansprüche, wobei ein Raman-Übergang zwischen wenigstens zwei internen Elektronenzuständen (12, 14) durch den ersten und zweiten Analyse-Laserstrahl (26, 28) ausgelöst wird, wobei ein quantisierter Drehimpuls auf die Schwerpunktbewegung der Atome (100) übertragen wird,
insbesondere wobei durch den Raman-Übergang Rabi-Oszillationen zwischen den wenigstens zwei internen Elektronenzuständen (12, 14) bewirkt werden.

6. Verfahren nach einem der vorhergehenden Ansprüche, wobei durch Einstrahlung des ersten und zweiten Analyse-Laserstrahls (26, 28) ein Übergang zwischen den wenigstens zwei Drehimpulszuständen (13, 15) der Schwerpunktbewegung der Atome (100) auf die in der Falle (200) gefangenen Atome (100) bewirkt wird.
und/oder
wobei die Atome (100) in dem Torus (22) lokalisiert werden und ein Übergang zwischen den wenigstens zwei Drehimpulszuständen (13, 15) der Schwerpunktbewegung der Atome (100) durch Übertragung eines Impulses durch einen Bragg-Puls auf die in der Falle (200) gefangenen Atome (100) bewirkt wird,
und/oder
wobei die Falle (200) eine optische Dipolfalle bildet, die durch Überlagerung eines Lichtblatts (24) und eines Laserstrahls (20) gebildet wird,
wobei das Lichtblatt (24) die Atome (100) entlang einer Raumachse (z) auf ein in beiden Richtungen begrenztes, insbesondere ebenes, Raumsegment (32) beschränkt und
wobei der Laserstrahl (20) senkrecht zu dem Raumsegment (32) orientiert ist und ein ringförmiges Intensitätsprofil in dem Raumsegment (32) aufweist und einen Torus (22) vorgibt,
wobei die Atome (100) in dem Torus (22) gefangen sind und eine Bewegung der Atome (100) auf einen azimuthalen Winkel beschränkt ist.

7. Sensor (1000) zur Durchführung eines Verfahrens nach einem der vorhergehenden Ansprüche zur Bestimmung einer Winkelbeschleunigung einer externen Rotation, umfassend
eine Mehrzahl von, insbesondere ultra-kalten, Atomen (100), welche einen Übergang von einem energetischen Grundzustand (10) zu wenigstens einem energetisch angeregten Zustand (16) ihres Elektronensystems aufweisen,
eine strahlungsinduzierte Falle (200), welche eine Bewegung der Atome (100) auf einen Torus (22) beschränkt,
wobei die Atome (100) wenigstens einen ersten und einen zweiten internen Elektronenzustand (12, 14) aufweisen, mit welchen die Atome (100) in der Falle (200) gefangen sind, wobei die Mehrzahl von Atomen (100) in der Falle (200) in einem Grundzustand (10) sind, und wobei sich die gefangenen Atome (100) mit quantisiertem Drehimpuls in derselben Richtung im Torus (22) bewegen,
ein Mittel (25) in Form eines ersten Analyse-Laserstrahls (26) und eines zweiten Analyse Laserstrahls (28), mit einem ersten Puls des ersten und zweiten Analyselaserstrahls (26, 28), einem zweiten Puls des ersten und zweiten Analyse-Laserstrahls (26, 28) und einem dritten Puls des ersten und zweiten Analyse-Laserstrahls (26, 28), um zwischen den wenigstens zwei internen Elektronenzuständen (12, 14) mit einem Drehimpulsübertrag auf die Schwerpunktbewegung der Atome (100) kohärent zu wechseln.

8. Sensor nach Anspruch 7, wobei die Winkelbeschleunigung durch eine Bestimmung einer jeweiligen Population (50) der Atome (100) in wenigstens zwei Drehimpulszuständen (13, 15) der Schwerpunktbewegung der Atome (100) bestimmt wird.

9. Sensor nach Anspruch 8, wobei die Winkelbeschleunigung aus einer Periode (62) der Population (50) im ersten Drehimpulszustand (13) für unterschiedliche Interrogationszeiten bestimmt wird,
insbesondere wobei die Winkelbeschleunigung aus der Periode (62) der Population (50) im ersten Drehimpulszustand (13) in Abhängigkeit eines Quadrats (60) der Interrogationszeit bestimmt wird, insbesondere
wobei eine Einrichtung (300) zur Bildgebung vorliegt, mit der die Population (50) durch Mikrowellenanregung gefolgt von einer Absorptions-Bildgebung bestimmt wird.

10. Sensor nach einem der Ansprüche 7 bis 9, wobei die Atome (100) Natriumatome sind, welche einen Übergang eines Valenzelektrons vom 3²*S*_{1/2} Grundzustand in den angeregten 3²*P*_{3/2} Zustand aufweisen.

11. Sensor nach einem der Ansprüche 7 bis 10, wobei die Falle (200) als optische Dipolfalle ausgebildet ist, die durch Überlagerung eines Lichtblatts (24) und eines Laserstrahls (20) gebildet ist,
wobei eine Bewegung der Atome (100) durch das Lichtblatt (24) entlang einer Raumachse (z) auf ein in beiden Richtungen begrenztes, insbesondere ebenes, Raumsegment (32) beschränkt ist,
wobei der Laserstrahl (20) quer, insbesondere senkrecht, zu dem Raumsegment (32) orientiert ist und ein ringförmiges Intensitätsprofil in dem Raumsegment (32) aufweist und einen Torus (22) vorgibt,
wobei die Atome (100) in dem Torus (22) gefangen sind und eine Bewegung der Atome (100) auf einen azimuthalen Winkel beschränkt ist.

12. Sensor nach Anspruch 11, wobei ein Magnetfeld (40) parallel zu dem Lichtblatt (24) angelegt ist, durch welches eine Zeeman-Aufspaltung eines Gesamtdrehimpulses (11) der Atome (100) in die wenigstens zwei internen Elektronenzustände (12, 14) ausgebildet ist.

13. Sensor nach Anspruch 12, wobei als Mittel (25) ein erster Analyse-Laserstrahl (26), insbesondere ein Laguerre-Gauß-Laserstrahl, sowie ein zweiter Analyse-Laserstrahl (28), insbesondere ein Gauß-Laserstrahl, parallel zu dem ersten Analyse-Laserstrahl (26) ausgebildet sind, wobei der erste und der zweite Analyse-Laserstrahl (26, 28) einen Frequenzunterschied aufweisen, welcher einem Energieunterschied zwischen den wenigstens zwei internen Elektronenzuständen (12, 14) entspricht,
insbesondere
wobei der erste und zweite Analyse-Laserstrahl (26, 28) zueinander phasengelockt sind.

14. Sensor nach Anspruch 13, wobei der erste und zweite Analyse-Laserstrahl (26, 28) zum Auslösen eines Raman-Übergangs zwischen den wenigstens zwei internen Elektronenzuständen (12, 14) ausgebildet sind, wobei ein quantisierter Drehimpuls auf die Schwerpunktbewegung der Atome (100) übertragen wird,
insbesondere wobei durch den Raman-Übergang Rabi-Oszillationen zwischen den wenigstens zwei internen Elektronenzuständen (12, 14) der Atome (100) vorliegen.

15. Sensor nach einem der Ansprüche 13 bis 14, wobei ein Übergang zwischen den wenigstens zwei Drehimpulszuständen (13, 15) der Schwerpunktbewegung der Atome (100) durch Einstrahlung des ersten und zweiten Analyse-Laserstrahls (26, 28) auf die in der Falle (200) gefangenen Atome (100) bewirkt wird.

16. Sensor nach einem der Ansprüche 8 bis 15, wobei die Atome (100) in dem Torus (22) lokalisiert sind und ein Übergang zwischen den wenigstens zwei Drehimpulszuständen (13, 15) der Schwerpunktbewegung der Atome (100) durch Übertragung eines Impulses durch einen Bragg-Puls auf die in der Falle (200) gefangenen Atome (100) bewirkt wird.

## Claims

1. Method for determining an angular acceleration of an external rotation, comprising
preparing a plurality of atoms (100) in a first internal electron state (12) in a trap (200), which restricts a movement of the atoms (100) to a region within a torus (22), and cooling the plurality of atoms (100) in the trap (200) into a ground state (10), wherein the atoms (100) move with quantized angular momentum in the same direction in the torus;
radiating a first pulse of a first analysis laser beam (26), in particular a Laguerre-Gaussian laser beam, and a second analysis laser beam (28), in particular a Gaussian laser beam, onto the atoms (100) trapped in the trap (200) in order to generate a uniformly distributed superposition between a first and a second quantum mechanical angular momentum state (13, 15) of a centre of gravity movement of the atoms (100);
developing the atoms (100) in the trap (200) for an interrogation time;
radiating a second pulse of the first and second analysis laser beams (26, 28) onto the atoms (100) for the complete exchange of a population (50) of the atoms (100) between the two angular momentum states (13, 15);
developing the atoms (100) in the trap (200) for an interrogation time;
radiating a third pulse of the first and second analysis laser beams (26, 28) onto the atoms (100) for superposition of the two angular momentum states (13, 15) of the centre of gravity movement of the atoms (100) and for exchange of at least part of the population (50) of the atoms (100) between the two angular momentum states (13, 15);
determining the population (50) of the atoms (100) in the first internal electron state (12);
determining the angular acceleration from the population (50) in the first internal electron state (12).

2. Method according to Claim 1, wherein the population (50) of the atoms (100) in the first internal electron state (12) is determined by microwave excitation followed by absorption imaging.

3. Method according to Claim 1 or 2, wherein a pulse area of the first and third pulses acting on the atoms (100) is half the magnitude of a pulse area of the second pulse acting on the atoms (100),
and/or
wherein the first analysis laser beam (26) and the second analysis laser beam (28) are phase-locked.

4. Method according to any of the preceding claims, wherein the angular acceleration is determined from a period (62) of the population (50) in the first internal electron state (12) for different interrogation times, in particular wherein the angular acceleration is determined from the period (62) of the population (50) in the first internal electron state (12) as a function of a square (60) of the interrogation time.

5. Method according to any of the preceding claims, wherein a Raman transition between at least two internal electron states (12, 14) is triggered by the first and second analysis laser beams (26, 28), wherein a quantized angular momentum is transferred to the centre of gravity movement of the atoms (100),
in particular wherein Rabi oscillations between the at least two internal electron states (12, 14) are caused by the Raman transition.

6. Method according to any of the preceding claims, wherein a transition between the at least two angular momentum states (13, 15) of the centre of gravity movement of the atoms (100) is caused by radiating the first and second analysis laser beams (26, 28) onto the atoms (100) trapped in the trap (200),
and/or
wherein the atoms (100) are localized in the torus (22) and a transition between the at least two angular momentum states (13, 15) of the centre of gravity movement of the atoms (100) is caused by transfer of a momentum by means of a Bragg pulse to the atoms (100) trapped in the trap (200),
and/or
wherein the trap (200) forms an optical dipole trap, which is formed by superimposing a light sheet (24) and a laser beam (20),
wherein the light sheet (24) restricts the atoms (100) along a spatial axis (z) to an, in particular plane, spatial segment (32) delimited in both directions, and wherein the laser beam (20) is oriented perpendicularly to the spatial segment (32) and has a ring-shaped intensity profile in the spatial segment (32) and predefines a torus (22),
wherein the atoms (100) are trapped in the torus (22) and a movement of the atoms (100) is restricted to an azimuthal angle.

7. Sensor (1000) for carrying out a method according to any of the preceding claims for determining an angular acceleration of an external rotation, comprising a plurality of, in particular ultra-cold, atoms (100) which have a transition from an energetic ground state (10) to at least one energetically excited state (16) of their electron system,
a radiation-induced trap (200), which restricts a movement of the atoms (100) to a torus (22),
wherein the atoms (100) have at least a first and a second internal electron state (12, 14) with which the atoms (100) are trapped in the trap (200), wherein the plurality of atoms (100) in the trap (200) are in a ground state (10), and wherein the trapped atoms (100) move with quantized angular momentum in the same direction in the torus (22),
a means (25) in the form of a first analysis laser beam (26) and a second analysis laser beam (28), having a first pulse of the first and second analysis laser beams (26, 28), a second pulse of the first and second analysis laser beams (26, 28) and a third pulse of the first and second analysis laser beams (26, 28), in order to change coherently between the at least two internal electron states (12, 14) with an angular momentum transfer to the centre of gravity movement of the atoms (100).

8. Sensor according to Claim 7, wherein the angular acceleration is determined by a determination of a respective population (50) of the atoms (100) in at least two angular momentum states (13, 15) of the centre of gravity movement of the atoms (100).

9. Sensor according to Claim 8, wherein the angular acceleration is determined from a period (62) of the population (50) in the first angular momentum state (13) for different interrogation times,
in particular wherein the angular acceleration is determined from the period (62) of the population (50) in the first angular momentum state (13) as a function of a square (60) of the interrogation time,
in particular
wherein a device (300) for imaging is present, by means of which the population (50) is determined by microwave excitation followed by absorption imaging.

10. Sensor according to any of Claims 7 to 9, wherein the atoms (100) are sodium atoms having a transition of a valence electron from the 3²S_{1/2} ground state to the excited 3²P_{3/2} state.

11. Sensor according to any of Claims 7 to 10, wherein the trap (200) is formed as an optical dipole trap, which is formed by superimposing a light sheet (24) and a laser beam (20),
wherein a movement of the atoms (100) is restricted by the light sheet (24) along a spatial axis (z) to an, in particular plane, spatial segment (32) delimited in both directions,
wherein the laser beam (20) is oriented transversely, in particular perpendicularly, to the spatial segment (32) and has a ring-shaped intensity profile in the spatial segment (32) and predefines a torus (22),
wherein the atoms (100) are trapped in the torus (22) and a movement of the atoms (100) is restricted to an azimuthal angle.

12. Sensor according to Claim 11, wherein a magnetic field (40) is applied parallel to the light sheet (24), by means of which Zeeman splitting of a total angular momentum (11) of the atoms (100) into the at least two internal electron states (12, 14) is formed.

13. Sensor according to Claim 12, wherein a first analysis laser beam (26), in particular a Laguerre-Gaussian laser beam, and a second analysis laser beam (28), in particular a Gaussian laser beam, parallel to the first analysis laser beam (26) are formed as means (25), wherein the first and second analysis laser beams (26, 28) have a frequency difference corresponding to an energy difference between the at least two internal electron states (12, 14),
in particular
wherein the first and second analysis laser beams (26, 28) are phase-locked with respect to each other.

14. Sensor according to Claim 13, wherein the first and second analysis laser beams (26, 28) are designed for triggering a Raman transition between the at least two internal electron states (12, 14), wherein a quantized angular momentum is transferred to the centre of gravity movement of the atoms (100),
in particular wherein Rabi oscillations between the at least two internal electron states (12, 14) of the atoms (100) are present as a result of the Raman transition.

15. Sensor according to either of Claims 13 and 14, wherein a transition between the at least two angular momentum states (13, 15) of the centre of gravity movement of the atoms (100) is caused by radiating the first and second analysis laser beams (26, 28) onto the atoms (100) trapped in the trap (200).

16. Sensor according to any of Claims 8 to 15, wherein the atoms (100) are localized in the torus (22) and a transition between the at least two angular momentum states (13, 15) of the centre of gravity movement of the atoms (100) is caused by transfer of a momentum by means of a Bragg pulse to the atoms (100) trapped in the trap (200).

## Revendications

1. Méthode de détermination de l'accélération angulaire d'une rotation externe, comprenant préparation d'une pluralité d'atomes (100) dans un premier état électronique interne (12) dans un piège (200), lequel limite le mouvement des atomes (100) à une zone à l'intérieur d'un tore (22), et refroidissement de la pluralité d'atomes (100) dans le piège (200) dans un état fondamental (10), les atomes (100) se déplaçant dans la même direction dans le tore avec un moment cinétique quantifié ;
irradiation avec une première impulsion d'un premier faisceau laser d'analyse (26), en particulier d'un faisceau laser de Laguerre-Gauss, et d'un deuxième faisceau laser d'analyse (28), en particulier d'un faisceau laser gaussien, des atomes (100) piégés dans le piège (200) afin de générer une superposition uniformément répartie entre un premier et un deuxième état de moment cinétique quantique (13, 15) d'un mouvement du centre de gravité des atomes (100) ; développement des atomes (100) dans le piège (200) pour un temps d'interrogation ;
irradiation avec une deuxième impulsion du premier et du deuxième faisceau laser d'analyse (26, 28) des atomes (100) en vue de l'échange complet d'une population (50) d'atomes (100) entre les deux états de moment cinétique (13, 15) ;
développement des atomes (100) dans le piège (200) pour un temps d'interrogation ;
irradiation avec une troisième impulsion du premier et du deuxième faisceau laser d'analyse (26, 28) des atomes (100) en vue de la superposition des deux états de moment cinétique (13, 15) du mouvement du centre de gravité des atomes (100) et en vue de l'échange d'au moins une partie de la population (50) des atomes (100) entre les deux états de moment cinétique (13, 15) ;
détermination de la population (50) des atomes (100) dans le premier état électronique interne (12) ; détermination de l'accélération angulaire à partir de la population (50) dans le premier état électronique interne (12).

2. Procédé selon la revendication 1, la population (50) des atomes (100) dans le premier état électronique interne (12) étant déterminée par excitation par micro-ondes suivie d'une imagerie par absorption.

3. Procédé selon la revendication 1 ou 2, une surface d'impulsion de la première et de la troisième impulsion agissant sur les atomes (100) étant égale à la moitié d'une surface d'impulsion de la deuxième impulsion agissant sur les atomes (100),
et/ou
le premier faisceau laser d'analyse (26) et le deuxième faisceau laser d'analyse (28) étant verrouillés en phase.

4. Procédé selon l'une des revendications précédentes, l'accélération angulaire étant déterminée à partir d'une période (62) de la population (50) dans le premier état électronique interne (12) pour différents temps d'interrogation,
en particulier, l'accélération angulaire étant déterminée à partir de la période (62) de la population (50) dans le premier état électronique interne (12) en fonction d'un carré (60) du temps d'interrogation.

5. Procédé selon l'une des revendications précédentes, une transition de Raman entre au moins deux états électroniques internes (12, 14) étant déclenchée par le premier et le deuxième faisceau laser d'analyse (26, 28), un moment cinétique quantifié étant transféré au mouvement du centre de gravité des atomes (100),
en particulier, la transition de Raman provoquant des oscillations de Rabi entre les au moins deux états électroniques internes (12, 14).

6. Procédé selon l'une des revendications précédentes, une transition entre les au moins deux états de moment cinétique (13, 15) du mouvement du centre de gravité des atomes (100) sur les atomes (100) piégés dans le piège (200) étant provoquée par l'irradiation avec le premier et le deuxième faisceau laser d'analyse (26, 28), et/ou
les atomes (100) étant localisés dans le tore (22) et une transition entre les au moins deux états de moment cinétique (13, 15) du mouvement du centre de gravité des atomes (100) étant provoquée par la transmission d'une impulsion par une impulsion de Bragg sur les atomes (100) piégés dans le piège (200),
et/ou
le piège (200) formant un piège dipolaire optique qui est formé par superposition d'une lame de lumière (24) et d'un faisceau laser (20),
la lame de lumière (24) limitant les atomes (100) le long d'un axe spatial (z) à un segment d'espace (32) délimité dans les deux directions, en particulier plan, et
le faisceau laser (20) étant orienté perpendiculairement au segment d'espace (32) et présentant un profil d'intensité annulaire dans le segment d'espace (32) et prédéfinissant un tore (22),
les atomes (100) étant piégés dans le tore (22) et un mouvement des atomes (100) étant limité à un angle azimutal.

7. Capteur (1000) destiné à mettre en œuvre un procédé selon l'une des revendications précédentes pour la détermination d'une accélération angulaire d'une rotation externe, comprenant
une pluralité d'atomes (100), en particulier ultra-froids, lesquels présentent une transition d'un état énergétiquement fondamental (10) à un état énergétiquement excité (16) de leur système électronique, un piège (200) induit par rayonnement, lequel limite un mouvement des atomes (100) à un tore (22),
les atomes (100) présentant au moins un premier et un deuxième état électronique interne (12, 14), avec lesquels les atomes (100) sont piégés dans le piège (200), la pluralité d'atomes (100) dans le piège (200) se trouvant dans un état fondamental (10), et les atomes (100) piégés se déplaçant dans la même direction dans le tore (22) avec un moment cinétique quantifié,
un moyen (25) sous la forme d'un premier faisceau laser d'analyse (26) et d'un deuxième faisceau laser d'analyse (28), avec une première impulsion du premier et du deuxième faisceau laser d'analyse (26, 28), une deuxième impulsion du premier et du deuxième faisceau laser d'analyse (26, 28) et une troisième impulsion du premier et du deuxième faisceau laser d'analyse (26, 28), afin d'alterner de manière cohérente entre les au moins deux états électroniques internes (12, 14) avec un transfert de moment cinétique sur le mouvement du centre de gravité des atomes (100).

8. Capteur selon la revendication 7, l'accélération angulaire étant déterminée par une détermination d'une population (50) respective des atomes (100) dans au moins deux états de moment cinétique (13, 15) du mouvement du centre de gravité des atomes (100).

9. Capteur selon la revendication 8, l'accélération angulaire étant déterminée à partir d'une période (62) de la population (50) dans le premier état de moment cinétique (13) pour différents temps d'interrogation, en particulier, l'accélération angulaire étant déterminée à partir de la période (62) de la population (50) dans le premier état de moment cinétique (13) en fonction d'un carré (60) du temps d'interrogation,
en particulier
un dispositif (300) d'imagerie étant présent, avec lequel la population (50) est déterminée par excitation aux micro-ondes suivie d'une imagerie par absorption.

10. Capteur selon l'une des revendications 7 à 9, où les atomes (100) étant des atomes de sodium, lesquels présentent une transition d'un électron de valence de l'état fondamental 3²S_{1/2} à l'état excité 3²P_{3/2}.

11. Capteur selon l'une des revendications 7 à 10, le piège (200) étant réalisé sous la forme d'un piège dipolaire optique qui est formé par superposition d'une lame de lumière (24) et d'un faisceau laser (20),
un mouvement des atomes (100) à travers la lame de lumière (24) le long d'un axe spatial (z) étant limité à un segment d'espace (32) délimité dans les deux directions, en particulier plan,
le faisceau laser (20) étant orienté transversalement, en particulier perpendiculairement, au segment d'espace (32) et présentant un profil d'intensité annulaire dans le segment d'espace (32) et prédéfinissant un tore (22), les atomes (100) étant piégés dans le tore (22) et un mouvement des atomes (100) étant limité à un angle azimutal.

12. Capteur selon la revendication 11, un champ magnétique (40) étant appliqué parallèlement à la lame de lumière (24), par lequel est formée une scission Zeeman d'un moment cinétique total (11) des atomes (100) en les au moins deux états électroniques internes (12, 14).

13. Capteur selon la revendication 12, le moyen (25) formé étant un premier faisceau laser d'analyse (26), en particulier un faisceau laser de Laguerre-Gauss, ainsi qu'un deuxième faisceau laser d'analyse (28), en particulier d'un faisceau laser gaussien, parallèle au premier faisceau laser d'analyse (26), le premier et le deuxième faisceau laser d'analyse (26, 28) présentant une différence de fréquence, laquelle correspond à une différence d'énergie entre les au moins deux états électroniques internes (12, 14),
en particulier
le premier et le deuxième faisceau laser d'analyse (26, 28) étant verrouillés en phase l'un par rapport à l'autre.

14. Capteur selon la revendication 13, les premier et deuxième faisceaux laser d'analyse (26, 28) étant configurés pour déclencher une transition de Raman entre au moins deux états électroniques internes (12, 14), un moment cinétique quantifié étant transmis au mouvement du centre de gravité des atomes (100),
en particulier, des oscillations de Rabi étant présentes entre les au moins deux états électroniques internes (12, 14) des atomes (100) du fait de la transition de Raman.

15. Capteur selon l'une des revendications 13 à 14, une transition entre les au moins deux états de moment cinétique (13, 15) du mouvement du centre de gravité des atomes (100) étant provoquée par l'irradiation avec le premier et le deuxième faisceau laser d'analyse (26, 28) des atomes (100) piégés dans le piège (200).

16. Capteur selon l'une des revendications 8 à 15, les atomes (100) étant localisés dans le tore (22) et une transition entre les au moins deux états de moment cinétique (13, 15) du mouvement du centre de gravité des atomes (100) étant provoquée par la transmission d'une impulsion par une impulsion de Bragg sur les atomes (100) piégés dans le piège (200).
